# EUROPEAN PATENT SPECIFICATION

(11) **EP 2 441 678 B1**
(45) Date of publication and mention of the grant of the patent: **16.01.2019**
(21) Application number: 11184733.1
(22) Date of filing: 11.10.2011
(51) Int. Cl.: B64D 45/02, B64D 37/32

(54) **Lightning strike protection in aircraft**
Blitzschlagschutz für Flugzeuge
Protection contre les impacts de foudre pour aéronefs

(30) Priority: 13.10.2010 ES 201031511
(43) Date of publication of application: 18.04.2012
(73) Proprietor: Airbus Operations S.L., 28906 Madrid (ES)
(72) Inventor: Bautista de la llave, Cesar, 28003 Madrid (ES); Lopez-Reina Torrijos, José Ignacio, 28906 Getafe, Madrid (ES)
(74) Representative: Elzaburu S.L.P.

(56) References cited:
- EP-A1- 1 484 245
- DE-A1- 10 200 564
- US-A1- 2007 207 421
- US-A1- 2008 078 880

## Description

### FIELD OF THE INVENTION

The present invention relates to a lightning strike protection system for fuel tank access covers in aircraft structure wing skins.

### BACKGROUND OF THE INVENTION

Aircraft wings are usually provided with openings in order to access the inner part of the wing box, where fuel tanks are placed. These openings need to have dimensions such as to allow a person get access to the wing box: this is why the openings are usually called manholes, these manholes being usually located in the lower skins of the aircraft wings. The access into the aircraft wing box is required, both during the wing assembly process and the aircraft operation along its service life for maintenance tasks of the aircraft.

Manholes made in aircraft wings are necessarily provided with covers, that comprise removable covers closing the manhole openings. These covers need to be fuel tight, as well as to form part of the aerodynamic surface of the lower skin part of the wings where the manholes are located, and need to protect the fuel tank from all kind of likely threads, such as impacts, lightning strike, fire, etc. Additionally, fuel tank access covers in aircraft are designed not to carry load capability, as they do not contribute to carry out flight, neither ground, wing covers loads. Thus, these manhole covers are only requested to keep aerodynamic requirements (flush with aerodynamic contour) and to withstand fuel pressure loads and external impacts from different objects (called foreign object impacts), such as runway debris, tire debris, engine small fragments (UERF), etc.

At present, composite materials are used more and more frequently in aircraft structures, and also in aircraft wings. These materials are sensitive to high temperatures and hot spots, specially coming from lightning strikes, because of the low melting temperature of the resin used in said materials. Therefore, in composite design, in order to keep the damage produced by a lightning strike within allowable limits (with no capability of degradation of structural components), and preventing hazardous ignition source (can be sparking, arcing and/or hot spot) within the fuel tanks area, it is mandatory to have in these composite structures a lightning strike protection system, that typically consists in a metallic conductive mesh embedded in the composite laminate externally. The outer surface surrounding an access manhole in aircraft wings requires surface protection, such that this surface is made conductive, thus providing lightning strike protection, which will be appropriate to the lightning zone and the type of threat applicable in which the manhole is located.

Typically in the prior art, manhole covers comprise two closing parts or doors that, when brought together, by screwing, clamp onto the wing skin. The external door is usually made in metal in order to shield and prevent door breakage from high energy impacts. The inner door can be made of composite material, and provides the required stiffness to support the fuel tank pressure, having the clamping capability to be attached to the wing skin. When a manhole is machined in a wing skin, made from composite material and comprises an embedded metallic mesh for lightning strike protection, this mesh is damaged in many occasions, and has to be restored in order to keep electrical bonding between the external metallic cover and the metallic mesh. Such operation is hard, cost and time consuming. Typically, the inner door in the manhole cover is electrically isolated from the wing skin, in order to prevent possible sparking into the fuel tank due to the lightning current flowing to the inner surfaces.

DE 102 00564 A1, which is regarded as being the closest prior art and discloses the preamble of independent claim 1, referred to a lightning protection system for a combination of a structural element and an attached closure element, comprises a net consisting of a metal or a fiber composite with electrically conductive fibers on the outer surface of the closure element. Additional electrically insulating sealing layers are located between the structural and closure elements, and an electrically insulating layer covers a surface region of the structural element around the fastening unit.

Therefore, it shall be desirable to provide manhole covers in aircraft wings accessing fuel tanks splitting two functionalities: keeping the mechanical attachment between the fuel tank access cover and the skin , and keeping the electrical bonding between external fuel tank access cover and the skin lightning strike protection mesh . For both objects, it shall be desirable to provide manhole covers that decouple both functionalities.

The present invention provides a solution to the afore-mentioned problems.

### SUMMARY OF THE INVENTION

It is an object of the present invention to provide a lightning strike protection system in manholes made in aircraft wings to access fuel tanks, these manholes being made in the lower skin of the aircraft wings, the skin being made in composite material and comprising a metallic mesh embedded in its structure.

The object of the invention is therefore to provide manhole covers presenting lightning strike protection and imparting two functionalities: the manhole covers are clamped to the wing lower skin, and provide an electrical bonding between their outer covers and the metallic mesh embedded in the outer area of the skin, such that the mentioned functionalities are decoupled one from the other. The Lightning strike protection system of the invention would prevent current flowing to the inner fuel tank surfaces.

The lightning strike protection system provided for fuel tank access covers of the invention comprise an outer cover made of metallic material, that coats externally the manhole, and an inner cover made of composite material. The outer cover of the invention also comprises a lip element, integrated in the same metallic material of the outer cover, and a conductive visco-elastic material or metallic spring provided over the mentioned lip element. The outer cover of the manhole covers of the invention also comprise an electrically isolating gasket, covering the internal area where the outer cover contacts the skin made of composite material.

This arrangement makes possible that the outer cover contacts the outer metallic mesh embedded in the skin of composite material, such that this contact is made in a tight manner, providing a continuous electrical bonding between the skin and the manhole cover. The isolating gasket assures that the electrical bonding is kept between the outer cover lip element and the metallic mesh embedded in the wing skin.

Also, according to the invention, the fuel tank access covers and the access hole in the skin are designed in order to keep a controlled (Tolerance Analysis) gap target between the outer cover lip element and the wing skin. Such gap is closed by the visco-elastic material or metallic spring providing the required adjustment of compressibility between said elements (fuel tank access cover tightening) and adjusting them in a conductive manner.

Other characteristics and advantages of the present invention will be clear from the following detailed description of embodiments illustrative of its object in relation to the attached figures.

### DESCRIPTION OF THE DRAWINGS

Figure 1 is a section view showing the detail of machined manhole covers in aircraft wing skins made of composite material, as known in the prior art.
Figures 2a and 2b provide views in detail of the lightning strike protection system for fuel tank access covers in aircraft, and of access holes according to the invention.

### DETAILED DESCRIPTION OF THE INVENTION

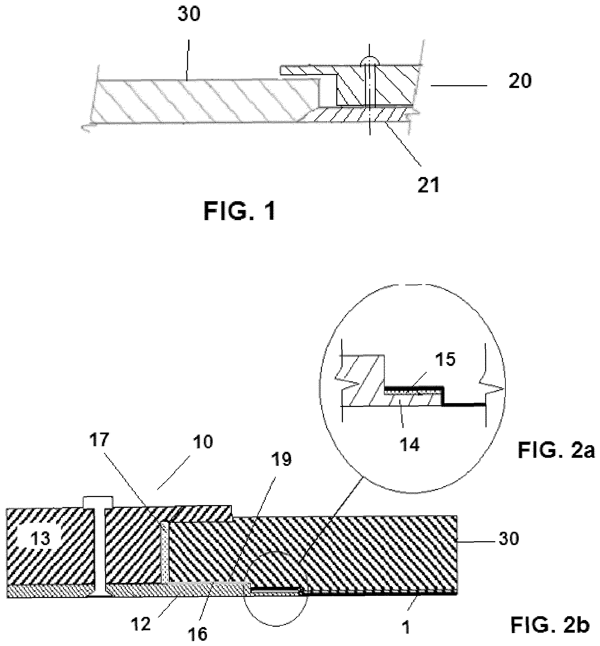

Figure 1 shows manhole covers according to the prior art, in which mechanical tightness and electrical bonding are obtained by machining the wing skin. However, the problem of these systems is that the manufacturing costs and timings are very high and, at the same time, the metallic mesh embedded in the outer skin 30 of the aircraft is damaged, therefore preventing an effective electrical bonding between the manhole outer covers 21 and the skin 30, which is essential for avoiding sparking.

It is an object of the present invention to provide a lightning strike protection system in manholes made in aircraft wings to access fuel tanks (called fuel tank access covers 10), these manholes being made in the lower skin 30 of the aircraft wings, the skin 30 being made in composite material and comprising a metallic mesh 1 embedded in its structure. Mesh density will depend on the lightning threat applicable and on the design concept as well (type of CFRP, thickness, etc.).

The fuel tank access covers or manhole covers 10 of the invention comprise an outer cover 12 made of metallic material, that coats externally the manhole, and an inner cover 13 made of composite material. The outer cover 12 also comprises a lip element 14, made of the same metallic material than that of the outer cover 12 and being integrated in its structure, and a conductive visco-elastic element 15 (it can also be a metallic spring element) provided over the mentioned lip element 14 (see Figures 2a and 2b). This arrangement makes possible that the outer cover 12 contacts the outer metallic mesh 1 embedded in the skin 30 of composite material in the aircraft wing, such that this contact is made through the visco-elastic material or metallic spring 15, providing a continuous electrical bonding between the skin 30 and the manhole cover 10.

The outer cover 12 of the manhole covers 10 of the invention also comprises an electrically isolating gasket 16, covering the internal area where the outer cover 12 contacts the skin 30 made of composite material (see Figure 2a). The isolating gasket 16 assures that the electrical bonding is kept between the outer cover 12 of metallic material and the metallic mesh 1 in the outer part of the aircraft skin 30. The mechanical attachment of the fuel tank access cover 10 is provided by the clamping forces of screwing between contact surfaces of the outer cover 12 and wing skin 30 at a machined area 19 (see Figure 2b).

The manhole covers 10 of the invention also comprise a gap 17 (Figure 2b) which is continuously maintained between the inner cover 13 of the manhole cover 10 and the skin 30.

The thickness of the skin 30 is enough to withstand high energy impacts without fuel leakage. In a similar way, outer covers 12 should be designed in metal, preferably in titanium or in steel, to prevent foreign object penetration into the fuel tank. Any impact in the outer cover 12 of the fuel tank access cover 10 is absorbed by plastic deformation of the metal of said outer cover 12, being the produced forces reacted by the composite material of the skin 30.

The inner cover 13 is clamped to the skin 30, withstanding the fuel pressure and reacting the pressure load to the wing skin 30 by mechanical contact (Figure 2a).

In order to prevent sparking between the metallic outer cover 12 and the metallic mesh 1 in the skin 30, it is necessary to have electrical bonding between both parts. This is achieved by means of the lip element 14, made in the outer cover 12, this lip element 14 being made around the whole perimeter of the outer cover 12.

The lip element 14 has a thickness of preferably less than 2 mm, being made in the outer cover 12.

The conductive visco-elastic material or metallic spring 15 provided over the lip element 14, is sized to absorb the interface tolerances in the mechanical contact of the outer cover 12 against the skin 30, keeping at the same time the electrical contact between the lip element 14 and the external mesh 1 in the skin 30.

As redundant protection layer, the electrically isolating gasket 16 is provided in the outer cover 12. The electrically isolating gasket 16 is preferably a bead of resin, adhesive or plastic isolating material added in the inner surface of the outer cover 12 contacting a machined area 19 in the composite laminate of the skin 30, in order to avoid sparking or electrical discharge in the mentioned area (Figures 2a and 2b).

Although the present invention has been fully described in connection with preferred embodiments, it is evident that modifications may be introduced within the scope thereof, not considering this as limited by these embodiments, but by the contents of the following claims.

## Claims

1. Lightning strike protection system for fuel tank access covers (10) in composite structures having a skin (30), this system comprising an outer cover (12) made of metallic material, that coats externally the fuel tank access covers (10) and an inner cover (13) made of composite material, the outer cover (12) also comprising a lip element (14), made of the same metallic material than that of the outer cover (12) and being integrated in its structure, and a conductive visco-elastic material or spring element (15) provided over the mentioned lip element (14), **characterized in that** the outer cover (12) comprises an electrically isolating gasket (16), covering the internal area where the outer cover (12) contacts the skin (30) in composite material, the electrically isolating gasket (16) being made of composite material.

2. Lightning strike protection system according to claim 1, wherein the fuel tank access covers (10) also comprise a gap (17) which is continuously maintained between the inner cover (13) and the skin (30).

3. Lightning strike protection system according to any of the previous claims wherein the lip element (14) has a thickness of around 2 mm.

4. Lightning strike protection system according to any of the previous claims wherein the system is used in manholes made in aircraft wings to access fuel tanks, these manholes being made in the lower skin (30) of the aircraft wings, the skin (30) being made in composite material and comprising a metallic mesh (1) embedded in its structure.

5. Lightning strike protection system according to claim 4 wherein the thickness of the skin (30) is sized to withstand the stress in flight and during ground loading.

6. Lightning strike protection system according to any of claims 4-5 wherein the outer cover (12) is designed in metal, preventing foreign object penetration into the fuel tank.

7. Lightning strike protection system according to any of claims 4-6 wherein the electrically isolating gasket (16) is a bead of resin, adhesive or plastic isolating material.

8. Lightning strike protection system according to claim 7 wherein the electrically isolating gasket (16) is made in the inner surface of the outer cover (12) contacting a machined edge (19) made in the skin (30).

## Patentansprüche

1. Blitzschlagschutzsystem für Abdeckungen (10) der Zugänge zum Treibstofftank in Verbundstrukturen mit einer Haut (30), wobei dieses System eine Außenabdeckung (12), bestehend aus einem Metallwerkstoff, die die Abdeckungen (10) der Zugänge zum Treibstofftank äußerlich beschichtet, und eine Innenabdeckung (13), bestehend aus einem Verbundwerkstoff, umfasst, wobei die Außenabdeckung (12) ebenfalls ein Lippenelement (14), das aus dem gleichen Metallwerkstoff wie die Außenabdeckung (12) besteht und in deren Struktur integriert ist, und einen leitenden viskoelastischen Werkstoff oder ein Federelement (15), das über dem erwähnten Lippenelement (14) vorgesehen ist, umfasst, **dadurch gekennzeichnet, dass** die Außenabdeckung (12) eine elektrisch isolierende Dichtung (16) umfasst, die den Innenbereich, in dem die Außenabdeckung (12) mit der Haut (30) im Verbundwerkstoff in Kontakt kommt, abdeckt, wobei die elektrisch isolierende Dichtung (16) aus einem Verbundwerkstoff besteht.

2. Blitzschlagschutzsystem nach Anspruch 1, wobei die Abdeckungen (10) der Zugänge zum Treibstofftank ebenfalls eine Lücke (17) umfassen, die durchgehend zwischen der Innenabdeckung (13) und der Haut (30) verläuft.

3. Blitzschlagschutzsystem nach einem der vorhergehenden Ansprüche, wobei das Lippenelement (14) eine Dicke von etwa 2 mm aufweist.

4. Blitzschlagschutzsystem nach einem der vorhergehenden Ansprüche, wobei das System bei Mannlöchern verwendet wird, die in Flugzeugflügeln erzeugt werden, um Zugang zu den Treibstofftanks zu gewähren, wobei diese Mannlöcher in der unteren Haut (30) der Flugzeugflügel erzeugt werden und wobei die Haut (30) aus einem Verbundwerkstoff besteht und ein in ihrer Struktur eingebettetes Mettalgewebe (1) umfasst.

5. Blitzschlagschutzsystem nach Anspruch 4, wobei die Dicke der Haut (30) so dimensioniert ist, dass sie der Beanspruchung beim Flug und während der ebenerdigen Verladung standhält.

6. Blitzschlagschutzsystem nach einem der Ansprüche 4-5, wobei die Außenabdeckung (12) in Metall ausgeführt ist, um das Eindringen von Fremdkörpern in den Treibstofftank zu verhindern.

7. Blitzschlagschutzsystem nach einem der Ansprüche 4-6, wobei die elektrisch isolierende Dichtung (16) eine Perle aus isolierendem Harz-, Haft- oder Kunststoffmaterial ist.

8. Blitzschlagschutzsystem nach Anspruch 7, wobei die elektrisch isolierende Dichtung (16) in der Innenfläche der Außenabdeckung (12) erzeugt wird und in Kontakt mit einer in der Haut (30) erzeugten bearbeiteten Kante (19) steht.

## Revendications

1. Système de protection contre les impacts de foudre pour couvercles d'accès aux réservoirs à carburant (10) dans des structures composites possédant une peau (30), ce système comprenant un couvercle externe (12) fabriqué en matériau métallique, qui recouvre extérieurement les couvercles d'accès aux réservoirs à carburant (10) et un couvercle interne (13) fabriqué en matériau composite, le couvercle externe (12) comprenant également une lèvre (14), fabriquée dans le même matériau métallique que celui du couvercle externe (12) et étant intégrée à sa structure, et un matériau viscoélastique conducteur ou élément de ressort (15) disposé sur ladite lèvre (14), **caractérisé en ce que** le couvercle externe (12) comprend un joint d'isolation électrique (16), recouvrant la zone interne où le couvercle externe (12) est en contact avec la peau (30) en matériau composite, le joint d'isolation électrique (16) étant fabriqué en matériau composite.

2. Système de protection contre les impacts de foudre selon la revendication 1, dans lequel les couvercles d'accès aux réservoirs à carburant (10) comprennent également un espace (17) qui est présent de façon ininterrompue entre le couvercle interne (13) et la peau (30).

3. Système de protection contre les impacts de foudre selon l'une quelconque des revendications précédentes, dans lequel la lèvre (14) a une épaisseur d'environ 2 mm.

4. Système de protection contre les impacts de foudre selon l'une quelconque des revendications précédentes, dans lequel le système est utilisé dans des trous d'homme réalisés dans des ailes d'aéronef pour accéder aux réservoirs à carburant, ces trous d'homme étant réalisés dans la peau inférieure (30) des ailes de l'aéronef, la peau (30) étant fabriquée en matériau composite et comprenant un grillage métallique (1) incrusté dans sa structure.

5. Système de protection contre les impacts de foudre selon la revendication 4, dans lequel l'épaisseur de la peau (30) est dimensionnée pour résister à la contrainte en vol et durant le chargement au sol.

6. Système de protection contre les impacts de foudre selon l'une quelconque des revendications 4-5, dans lequel le couvercle externe (12) est conçu en métal, pour empêcher la pénétration de corps étrangers dans le réservoir à carburant.

7. Système de protection contre les impacts de foudre selon l'une quelconque des revendications 4-6, dans lequel le joint d'isolation électrique (16) est un cordon de résine, de matériau isolant adhésif ou plastique.

8. Système de protection contre les impacts de foudre selon la revendication 7, dans lequel le joint d'isolation électrique (16) est réalisé dans la surface interne du couvercle externe (12) en contact avec un bord usiné (19) réalisé dans la peau (30).
